# FASCICULE DE BREVET EUROPEEN

(11) **EP 3 243 297 B1**
(45) Date de publication et mention de la délivrance du brevet: **06.03.2019**
(21) Numéro de dépôt: 16702172.4
(22) Date de dépôt: 06.01.2016
(51) Int. Cl.: H04L 12/14, H04M 15/00, H04W 48/00

(54) **PROCÉDÉ DE REDIRECTION DE FLUX DE DONNÉES D'UN COMPTE MOBILE VERS UN AUTRE COMPTE MOBILE**
VERFAHREN ZUM UMLENKEN VON DATENSTRÖMEN VON EINEM MOBILEN KONTO ZU EINEM ANDERN MOBILEN KONTO
METHOD OF REDIRECTING DATA STREAMS FROM A MOBILE ACCOUNT TO ANOTHER MOBILE ACCOUNT

(30) Priorité: 07.01.2015 FR 1550109
(43) Date de publication de la demande: 15.11.2017
(73) Titulaire: Orange, 75015 Paris (FR)
(72) Inventeur: BONNET, Cédric, 92130 Issy Les Moulineaux (FR); BALON, Marc, B-1495 Vilers-la-Ville (BE)
(86) Numéro de dépôt international: PCT/FR2016/050015
(87) Numéro de publication internationale: WO 2016/110645

(56) Documents cités:
- EP-A1- 1 748 662
- WO-A2-2004/075579
- US-A1- 2013 315 161
- US-A1- 2014 071 967

## Description

La présente invention concerne les réseaux de télécommunications mobiles. Elle concerne plus particulièrement les réseaux pouvant fonctionner en « mode paquet », c'est-à-dire mettant en oeuvre une commutation de paquets de données (« *Packet Switching* », ou PS en anglais), par exemple un réseau GPRS (General Packet Radio Service), ou un réseau UMTS (Universal Mobile Télécommunications System), ou encore un réseau EPS (Evolved Packet System) comprenant éventuellement un réseau WiFi.

Elle concerne encore plus particulièrement le rattachement de flux de données (émises ou reçues) à un autre compte mobile que celui auquel est associé le terminal mobile émetteur ou récepteur de ces flux de données.

On va tout d'abord, sur la base de deux exemples concrets, illustrer le problème visé par l'invention.

Selon un premier exemple, un fabricant de voitures vend une voiture équipée d'un terminal mobile permettant notamment aux passagers arrière de voir des vidéos, et prend en charge l'abonnement à un compte mobile associé à ce terminal mobile. Les données échangées au moyen de ce compte mobile peuvent être des données de divertissement (« *infotainment* » en anglais), et éventuellement aussi des données télémétriques (issues, par exemple, de capteurs du fonctionnement d'organes de la voiture, ou de capteurs du comportement du conducteur pour pouvoir périodiquement lui donner des conseils sur sa façon de conduire). Le prix de vente de la voiture inclut alors l'abonnement mobile pour une certaine durée. Le compte mobile est au nom du fabricant, et toute la consommation réseau du terminal mobile lui est facturée.

Afin d'éviter que le prix de revient de la voiture ne soit évalué sur la base d'une estimation erronée de cette consommation réseau, le fabricant de voitures souhaiterait n'avoir à payer que pour les données télémétriques, cependant que la consommation de données de divertissement serait facturée directement à l'utilisateur par le fabricant de la voiture (ce dernier étant au final refacturé pour l'ensemble de ces usages par l'opérateur de télécommunications fournissant l'abonnement mobile).

Un inconvénient d'une telle solution est qu'elle obligerait l'utilisateur à souscrire un abonnement mobile auprès dudit opérateur de télécommunications, lequel serait, a priori, un autre opérateur que celui auprès duquel l'utilisateur est déjà abonné pour son terminal mobile personnel ou d'entreprise. En outre, l'utilisateur ne disposerait pas, a priori, des services personnels qu'il a souscrits dans le cadre de son compte mobile personnel ou d'entreprise, par exemple un accès sécurisé à son entreprise, un accès à un service « *premium* » comprenant des services audiovisuels spécifiques, la consultation en temps réel de sa consommation, et ainsi de suite.

Selon un deuxième exemple, un fabricant d'appareil photos souhaite équiper l'ensemble de ses appareils avec une carte SIM permettant à ses clients d'envoyer directement leurs photos prises partout dans le monde sur leur espace de stockage (« *cloud* ») personnel, accessible à leur famille ou à leurs amis. Or selon l'état de l'art, pour ce faire, l'utilisateur d'un tel appareil photo serait obligé de souscrire un abonnement réseau supplémentaire, et son appareil photo ne lui permettrait pas de vérifier sa consommation réseau en temps réel.

Le document US2013/315161 A1 décrit un procédé pour faciliter les opérations de facturation pour un fournisseur de services d'un réseau mobile, le procédé comprenant : l'extraction d'une adresse de destination ou d'une adresse d'origine du trafic dans ledit réseau mobile vers ou depuis un dispositif mobile du réseau mobile, et la fourniture de ladite adresse de destination ou d'origine audit fournisseur de services.

La présente invention est décrite dans les revendications. Les mises en oeuvre et/ou exemples de la description qui ne sont pas couverts par les revendications ne sont pas considérés comme faisant partie de l'invention.

La présente invention concerne donc, selon un premier aspect, un procédé de redirection de flux de données échangés par un terminal mobile associé à un compte, dit compte tiers, auprès d'un réseau de télécommunications, dit premier réseau. Ledit procédé comprend une phase préalable comprenant les étapes suivantes :
- ledit premier réseau reçoit, de la part dudit terminal mobile, une requête d'enregistrement, et récupère le profil dudit compte tiers,
- le premier réseau émet une requête DNS (Domain Name System) incluant un nom de point d'accès dit APN (Access Point Name) de redirection,
- le système DNS fournit en réponse l'adresse IP (Internet Protocol) d'au moins un serveur, dit serveur de Redirection de Flux,
- le premier réseau monte un tunnel entre ledit serveur de Redirection de Flux et le terminal mobile, en fournissant au serveur de Redirection de Flux au moins un identifiant dudit compte tiers,
- le serveur de Redirection de Flux fournit à un réseau de télécommunications, dit second réseau, auprès duquel l'utilisateur du terminal mobile détient un compte, dit compte personnel, distinct du compte tiers, au moins un identifiant dudit compte personnel, et
- le serveur de Redirection de Flux monte un tunnel avec ledit second réseau,
- ledit second réseau attribue audit terminal mobile une adresse IP, dite seconde adresse IP, et transmet ladite seconde adresse IP audit serveur de Redirection de Flux, et
- le serveur de Redirection de Flux attribue au terminal mobile une adresse IP, dite première adresse IP, identique ou non à ladite seconde adresse IP, et envoie ladite première adresse IP au terminal mobile.

On notera que ledit premier réseau de télécommunications et ledit second réseau de télécommunications peuvent être identiques ou distincts. On notera également que ledit compte personnel peut éventuellement être associé à un terminal mobile personnel ou d'entreprise, distinct dudit terminal mobile associé au compte tiers.

Grâce à ces dispositions, le terminal mobile associé au compte tiers est mis en relation, via ledit serveur de Redirection de Flux, avec le réseau de télécommunications dans lequel l'utilisateur de ce terminal mobile détient son compte personnel. Cet utilisateur n'a donc pas à souscrire d'abonnement auprès du premier réseau pour pouvoir bénéficier de services de communication en mode paquet, et ce, en dépit du fait que le terminal mobile proprement dit est associé à un compte (différent du compte personnel) auprès de ce premier réseau ; dans le premier exemple ci-dessus, le titulaire du compte tiers reste le fabricant de voitures, et, dans le second exemple ci-dessus, le titulaire du compte tiers reste le fabricant d'appareils photos.

La nature de cette première adresse IP pourra être déterminée selon une politique réseau : elle pourra être identique à l'adresse du terminal mobile vue du second réseau, ou à l'adresse du terminal mobile vue du premier réseau, ou encore être différente de ces deux adresses IP.

Grâce à ces dispositions, une certaine adresse IP (ladite première adresse IP) est attribuée au terminal mobile pour l'ensemble de ses futures communications avec le serveur de Redirection de Flux, mais il sera néanmoins possible de séparer les communications entre le terminal mobile et le premier réseau, des communications entre le terminal mobile et le second réseau.

Selon des caractéristiques particulières, suite à ladite phase préalable, le terminal mobile échange des données, dites données personnelles, avec ledit second réseau, via ledit serveur de Redirection de Flux.

Grâce à ces dispositions, l'utilisateur du terminal peut accéder à tous les services souscrits dans le cadre de son compte personnel, et connaître en temps réel sa consommation personnelle. En outre, l'opérateur du second réseau peut commodément facturer cette consommation personnelle directement à l'utilisateur, aux échéances agréées.

Selon d'autres caractéristiques particulières, suite à ladite phase préalable, le terminal mobile échange des données, dites données de tiers, avec ledit premier réseau, via ledit serveur de Redirection de Flux.

Grâce à ces dispositions, le détenteur du compte tiers peut recevoir des données télémétriques qui lui sont utiles, par exemple des informations techniques collectées par le terminal mobile et relatives à l'environnement physique ou l'écosystème du terminal mobile.

Corrélativement, selon un deuxième aspect, l'invention concerne un serveur, dit serveur de Redirection de Flux, comprenant des moyens pour :
- recevoir, de la part d'un réseau de télécommunications, dit premier réseau, au moins un identifiant d'un compte, dit compte tiers, détenu par un terminal mobile auprès dudit premier réseau, et monter un tunnel avec le premier réseau,
- fournir à un réseau de télécommunications, dit second réseau, auprès duquel l'utilisateur du terminal mobile détient un compte, dit compte personnel, distinct dudit compte tiers, au moins un identifiant dudit compte personnel, et
- monter un tunnel avec ledit second réseau,
- recevoir, de la part dudit second réseau, une adresse IP, dite seconde adresse IP, attribuée audit terminal mobile, et
- attribuer au terminal mobile une adresse IP, dite première adresse IP, identique ou non à ladite seconde adresse IP, et envoyer ladite première adresse IP au terminal mobile.

Selon d'autres caractéristiques particulières, ledit serveur de Redirection de Flux comprend en outre des moyens pour :
- recevoir, de la part dudit terminal mobile, des données, dites données personnelles montantes, et retransmettre lesdites données personnelles montantes audit second réseau, et
- recevoir, de la part du second réseau, des données, dites données personnelles descendantes, et retransmettre lesdites données personnelles descendantes au terminal mobile.

Selon encore d'autres caractéristiques particulières, ledit serveur de Redirection de Flux comprend en outre des moyens pour :
- recevoir, de la part dudit terminal mobile, des données, dites données de tiers montantes, et retransmettre lesdites données de tiers montantes audit premier réseau, et
- recevoir, de la part du premier réseau, des données, dites données de tiers descendantes, et retransmettre lesdites données de tiers descendantes au terminal mobile.

Selon des caractéristiques encore plus particulières, ledit serveur de Redirection de Flux comprend en outre des moyens pour séparer le flux de données personnelles du flux de données de tiers lorsqu'il reçoit ces deux flux simultanément.

Les avantages offerts par ce serveur de Redirection de Flux sont essentiellement les mêmes que ceux offerts par les procédés corrélatifs succinctement exposés ci-dessus.

On notera qu'il est possible de réaliser ce serveur de Redirection de Flux dans le contexte d'instructions logicielles et/ou dans le contexte de circuits électroniques.

Selon un troisième aspect, l'invention concerne un système de redirection de flux de données, comprenant :
- au moins un serveur de Redirection de Flux tel que décrit succinctement ci-dessus,
- un système DNS (Domain Name System) associant un nom de point d'accès, dit APN de redirection, à l'adresse IP (Internet Protocol) dudit serveur de Redirection de Flux, et
- au moins un terminal mobile configuré pour émettre une requête d'enregistrement contenant une référence audit APN de redirection.

Les avantages offerts par ce système de redirection de flux de données sont essentiellement les mêmes que ceux offerts par les procédés de redirection de flux de données succinctement exposés ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes des procédés de redirection de flux de données succinctement exposés ci-dessus, lorsqu'il est exécuté sur un ordinateur.

Les avantages offerts par ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs.

On va décrire à présent, selon un mode de réalisation de l'invention, les étapes d'une phase préalable permettant la mise en place d'un écosystème adéquat.

On considère un terminal mobile possédant un compte, dit compte tiers, auprès d'un réseau de télécommunications, dit premier réseau. Ce terminal mobile peut être physiquement situé dans le premier réseau, ou être en situation d'itinérance (« *roaming* » en anglais) dans un autre réseau, dit réseau visité.

Selon une première étape, le premier réseau reçoit une requête d'enregistrement de la part du terminal mobile (le cas échéant, via un réseau visité). De manière classique, le premier réseau récupère alors le profil du compte tiers. Dans le présent mode de réalisation, ce profil mentionne un nom de point d'accès, que l'on appellera « APN de redirection », dédié à la mise en oeuvre de la présente invention.

On rappelle à cet égard qu'un APN (initiales des mots anglais (« *Access Point Name* ») est un identifiant permettant à l'utilisateur d'un réseau mobile de se connecter à un coeur de réseau IP à partir d'un réseau à commutation de paquets (« *Packet Data Network* », ou PDN en anglais) en identifiant le serveur d'interconnexion (par exemple un serveur « *Gateway GPRS Support Node* » (GGSN) dans les technologies GPRS et UMTS, ou un serveur « *PDN-Gateway* » (PDN-GW) dans la technologie EPS) qu'il souhaite utiliser.

Optionnellement, on peut prévoir que les requêtes d'enregistrement émises par le terminal mobile contiennent une référence audit APN de redirection, de façon à permettre au premier réseau d'effectuer une vérification de droits d'accès par comparaison avec l'APN de redirection mentionné dans le profil du compte tiers. Pour ce faire, ladite référence peut être commodément configurée dans les paramètres de connexion du terminal mobile.

Selon une deuxième étape, ledit premier réseau émet une requête DNS (Domaine Name System) incluant notamment :
- un indicatif de pays (« *Mobile Country Code* », ou MCC),
- un identifiant de l'opérateur du réseau (« *Mobile Network Code* », ou MNC), et
- l'APN de redirection.

Selon une troisième étape, au vu des informations présentes dans la requête, le système DNS fournit en réponse l'adresse IP d'au moins un serveur selon l'invention, dit serveur de Redirection de Flux (noté ci-après serveur SRF).

Selon une quatrième étape, le premier réseau (ainsi que, le cas échéant, le réseau visité) monte(nt) un tunnel, tel qu'un tunnel de session conforme au protocole GTP (« *GPRS Tunneling Protocol* »), entre ce serveur SRF et le terminal mobile. Ce faisant, le premier réseau fournit au serveur SRF au moins un identifiant, par exemple l'IMSI (« *International Mobile Subscriber Identity* ») et/ou le MSISDN (« *Mobile Station Integrated Services Digital Network* »), dudit compte tiers.

Selon une cinquième étape, le serveur SRF (qui a été provisionné à cet effet, ou qui a accès en temps réel à une base de données externe) fournit à un réseau de télécommunications, dit second réseau, auprès duquel l'utilisateur du terminal mobile détient un compte, dit compte personnel, distinct du compte tiers, au moins un identifiant, par exemple l'IMSI et/ou le MSISDN, dudit compte personnel, et monte un tunnel, tel qu'un tunnel de session GTP, avec ledit second réseau, en créant une interface de signalisation adéquate .

On notera que, outre ladite interface de signalisation, d'autres interfaces entre le premier réseau et le second réseau pourront, lors de cette étape ou ultérieurement, être mises en place. On pourra commodément, pour ce faire, utiliser des formats d'interfaces utilisés classiquement dans le contexte de l'itinérance ; ces interfaces peuvent être, par exemple :
- une interface de facturation, utilisant par exemple un agent de compensation du type « *Data Clearing House* » tel que prévu dans les procédures de transfert de compte TAP (« *Transferred Account Procedures* »), ou
- une interface de paiement, utilisant par exemple une institution de compensation du type « *Financial Clearing House* ».

Par ailleurs, le serveur SRF peut, optionnellement, fournir en outre au second réseau un ou plusieurs élément(s) d'information de service utiles à la mise en oeuvre de l'invention, destiné(s) par exemple à faciliter les opérations de facturation entre le premier réseau et le second réseau. Un tel élément d'information peut notamment prendre la forme d'un nom de point d'accès (APN) de service.

Selon une sixième étape, le second réseau attribue au terminal mobile une adresse IP, dite seconde adresse IP, et transmet ladite seconde adresse IP au serveur SRF.

Enfin, selon une septième étape, le serveur SRF attribue au terminal mobile une adresse IP, dite première adresse IP, identique ou non à ladite seconde adresse IP, et envoie ladite première adresse IP au terminal mobile.

Une fois cette phase préalable achevée, l'utilisateur du terminal mobile peut échanger, via le serveur SRF, des données, dites données personnelles, avec le second réseau, qui les traitera comme il le ferait avec n'importe quel flux de données associé à un terminal mobile personnel (ou d'entreprise) de l'utilisateur. Cet échange de données bénéficie donc avantageusement des conditions prévues dans le compte personnel de l'utilisateur.

Le terminal mobile peut en outre, optionnellement, échanger des données, dites données de tiers (telles que des données télémétriques dans le premier exemple ci-dessus), avec le compte tiers, via ledit serveur SRF. Dans ce cas, on prévoira de préférence que ledit serveur SRF est capable de séparer le flux de données personnelles du flux de données de tiers lorsqu'il reçoit ces deux flux simultanément. Selon une première variante, la séparation des flux est réalisée sur la base de noms de point d'accès (APN) respectifs utilisés par le terminal pour les flux respectifs ; selon une deuxième variante, le serveur SRF se charge d'identifier les types de flux parmi les flux qu'il reçoit sur la base de paramètres de transport, tels qu'adresses IP, ports, protocoles, et ainsi de suite.

On notera pour terminer que l'invention peut être mise en oeuvre au sein de noeuds de réseaux de communication, notamment des serveurs de redirection de flux de données ou des terminaux mobiles, au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre de l'un quelconque des procédés de redirection de flux de données selon l'invention.

En effet, l'invention vise aussi un programme d'ordinateur téléchargeable depuis un réseau de communication comprenant des instructions pour l'exécution des étapes d'un procédé de redirection de flux de données selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de redirection de flux de données selon l'invention.

## Revendications

1. Procédé de redirection de flux de données échangés par un terminal mobile associé à un compte, dit compte tiers, auprès d'un réseau de télécommunications, dit premier réseau, ledit procédé comprenant une phase préalable comprenant les étapes suivantes :
- ledit premier réseau reçoit, de la part dudit terminal mobile, une requête d'enregistrement, et récupère le profil dudit compte tiers, ce profil mentionnant un nom de point d'accès dit APN de redirection,
- le premier réseau émet une requête DNS, Domain Name System, incluant ledit APN de redirection,
- le système DNS fournit en réponse l'adresse IP, Internet Protocol, d'au moins un serveur, dit serveur de Redirection de Flux,
- le premier réseau monte un tunnel entre ledit serveur de Redirection de Flux et le terminal mobile, en fournissant au serveur de Redirection de Flux au moins un identifiant dudit compte tiers,
- le serveur de Redirection de Flux fournit à un réseau de télécommunications, dit second réseau, auprès duquel l'utilisateur du terminal mobile détient un compte, dit compte personnel, distinct du compte tiers, au moins un identifiant dudit compte personnel,
- le serveur de Redirection de Flux monte un tunnel avec ledit second réseau,
- ledit second réseau attribue audit terminal mobile une adresse IP, dite seconde adresse IP, et transmet ladite seconde adresse IP audit serveur de Redirection de Flux, et
- le serveur de Redirection de Flux attribue au terminal mobile une adresse IP, dite première adresse IP, identique ou non à ladite seconde adresse IP, et envoie ladite première adresse IP au terminal mobile.

2. Procédé de redirection de flux de données selon la revendication 1, dans lequel, suite à ladite phase préalable, le terminal mobile échange des données, dites données personnelles, avec ledit second réseau, via ledit serveur de Redirection de Flux,

3. Procédé de redirection de flux de données selon la revendication 1 ou la revendication 2, dans lequel, suite à ladite phase préalable, le terminal mobile échange des données, dites données de tiers, avec ledit premier réseau, via ledit serveur de Redirection de Flux,

4. Serveur, dit serveur de Redirection de Flux, comprenant des moyens pour :
- recevoir, de la part d'un réseau de télécommunications, dit premier réseau, au moins un identifiant d'un compte, dit compte tiers, détenu par un terminal mobile auprès dudit premier réseau, et monter un tunnel avec le premier réseau,
- fournir à un réseau de télécommunications, dit second réseau, auprès duquel l'utilisateur du terminal mobile détient un compte, dit compte personnel, distinct dudit compte tiers, au moins un identifiant dudit compte personnel,
- monter un tunnel avec ledit second réseau,
- recevoir, de la part dudit second réseau, une adresse IP, Internet Protocol, dite seconde adresse IP, attribuée audit terminal mobile, et
- attribuer au terminal mobile une adresse IP, dite première adresse IP, identique ou non à ladite seconde adresse IP, et envoyer ladite première adresse IP au terminal mobile,

5. Serveur de redirection de flux selon la revendication 4, comprenant en outre des moyens pour fournir au second réseau des informations servant aux opérations de facturation entre le premier réseau et le second réseau.

6. Serveur de redirection de flux selon la revendication 4 ou la revendication 5, comprenant en outre des moyens pour :
- recevoir, de la part dudit terminal mobile, des données, dites données personnelles montantes, et retransmettre lesdites données personnelles montantes audit second réseau, et
- recevoir, de la part du second réseau, des données, dites données personnelles descendantes, et retransmettre lesdites données personnelles descendantes au terminal mobile.

7. Serveur de redirection de flux de données selon l'une quelconque des revendications 4 à 6, comprenant en outre des moyens pour :
- recevoir, de la part dudit terminal mobile, des données, dites données de tiers montantes, et retransmettre lesdites données de tiers montantes audit premier réseau, et
- recevoir, de la part du premier réseau, des données, dites données de tiers descendantes, et retransmettre lesdites données de tiers descendantes au terminal mobile.

8. Serveur de redirection de flux de données selon la revendication 6 et la revendication 7, comprenant en outre des moyens pour séparer le flux de données personnelles du flux de données de tiers lorsqu'il reçoit ces deux flux simultanément,

9. Système de redirection de flux de données, comprenant :
- au moins un serveur de Redirection de Flux selon l'une quelconque des revendications 4 à 8,
- un système DNS, Domain Name System, associant un nom de point d'accès, dit APN de redirection, à l'adresse IP, Internet Protocol, dudit serveur de Redirection de Flux, et
- au moins un terminal mobile configuré pour émettre une requête d'enregistrement contenant une référence audit APN de redirection.

10. Moyen de stockage de données inamovible, ou partiellement ou totalement amovible, comportant des instructions de code de programme informatique pour l'exécution des étapes d'un procédé de redirection de flux de données selon l'une quelconque des revendications 1 à 3,

11. Programme d'ordinateur téléchargeable depuis un réseau de communication et/ou stocké sur un support lisible par ordinateur et/ou exécutable par un microprocesseur, comprenant des instructions pour l'exécution des étapes d'un procédé de redirection de flux de données selon l'une quelconque des revendications 1 à 3, lorsqu'il est exécuté sur un ordinateur.

## Patentansprüche

1. Verfahren zum Umleiten von Datenströmen, die von einem mobilen Endgerät ausgetauscht werden, das einem Drittkonto genannten Konto bei einem erstes Netz genannten Telekommunikationsnetz zugeordnet ist, wobei das Verfahren eine vorhergehenden Phase enthält, die die folgenden Schritte enthält:
- das erste Netz empfängt eine Registrierungsanforderung vom mobilen Endgerät und ruft das Profil des Drittkontos ab, wobei dieses Profil einen Zugangspunktnamen erwähnt, Umleitungs-APN genannt,
- das erste Netz sendet eine DNS-Anforderung, Domain Name System, die den Umleitungs-APN umfasst,
- das DNS-System liefert als Antwort die IP-Adresse, Internet Protocol, mindestens eines Stromumleitungsserver genannten Servers,
- das erste Netz montiert einen Tunnel zwischen dem Stromumleitungsserver und dem mobilen Endgerät, indem es dem Stromumleitungsserver mindestens eine Kennung des Drittkontos liefert,
- der Stromumleitungsserver liefert an ein zweites Netz genanntes Telekommunikationsnetz, bei dem der Benutzer des mobilen Endgeräts ein persönliches Konto genanntes Konto hat, das sich vom Drittkonto unterscheidet, mindestens eine Kennung des persönlichen Kontos,
- der Stromumleitungsserver montiert einen Tunnel mit dem zweiten Netz,
- das zweite Netz teilt dem mobilen Endgerät eine zweite IP-Adresse genannte IP-Adresse zu und überträgt die zweite IP-Adresse an den Stromumleitungsserver, und
- der Stromumleitungsserver teilt dem mobilen Endgerät eine erste IP-Adresse genannte IP-Adresse zu, die der zweiten IP-Adresse gleich ist oder nicht, und sendet die erste IP-Adresse an das mobile Endgerät.

2. Datenstrom-Umleitungsverfahren nach Anspruch 1, wobei das mobile Endgerät nach der vorhergehenden Phase persönliche Daten genannte Daten über den Stromumleitungsserver mit dem zweiten Netz austauscht.

3. Datenstrom-Umleitungsverfahren nach Anspruch 1 oder nach Anspruch 2, wobei das mobile Endgerät nach der vorhergehenden Phase Drittdaten genannte Daten über den Stromumleitungsserver mit dem ersten Netz austauscht.

4. Stromumleitungsserver genannter Server, der Einrichtungen enthält, um:
- von einem erstes Netz genannten Telekommunikationsnetz mindestens eine Kennung eines Drittkonto genannten Kontos zu empfangen, über die ein mobiles Endgerät beim ersten Netz verfügt, und einen Tunnel mit dem ersten Netz zu montieren,
- an ein zweites Netz genanntes Telekommunikationsnetz, bei dem der Benutzer des mobilen Endgeräts über ein persönliches Konto genanntes Konto verfügt, das sich vom Drittkonto unterscheidet, mindestens eine Kennung des persönlichen Kontos zu liefern,
- einen Tunnel mit dem zweiten Netz zu montieren,
- vom zweiten Netz eine zweite IP-Adresse genannte IP-Adresse, Internet Protocol, zu empfangen, die dem mobilen Endgerät zugeteilt ist,
- dem mobilen Endgerät eine erste IP-Adresse genannte IP-Adresse zuzuweisen, die der zweiten IP-Adresse gleich ist oder nicht, und die erste IP-Adresse an das mobile Endgerät zu senden.

5. Stromumleitungsserver nach Anspruch 4, der außerdem Einrichtungen enthält, um an das zweite Netz Informationen zu liefern, die für die Vorgänge der Fakturierung zwischen dem ersten Netz und dem zweiten Netz dienen.

6. Stromumleitungsserver nach Anspruch 4 oder nach Anspruch 5, der außerdem Einrichtungen enthält, um:
- vom mobilen Endgerät aufsteigende persönliche Daten genannte Daten zu empfangen und die aufsteigenden persönlichen Daten an das zweite Netz weiterzuleiten, und
- vom zweiten Netz absteigende persönliche Daten genannte Daten zu empfangen und die absteigenden persönlichen Daten an das mobile Endgerät weiterzuleiten.

7. Datenstrom-Umleitungsserver nach einem der Ansprüche 4 bis 6, der außerdem Einrichtungen enthält, um:
- vom mobilen Endgerät aufsteigende Drittdaten genannte Daten zu empfangen und die aufsteigenden Drittdaten an das erste Netz weiterzuleiten, und
- vom ersten Netz absteigende Drittdaten genannte Daten zu empfangen und die absteigenden Drittdaten an das mobile Endgerät weiterzuleiten.

8. Datenstrom-Umleitungsserver nach Anspruch 6 und nach Anspruch 7, der außerdem Einrichtungen enthält, um den Strom persönlicher Daten vom Strom von Drittdaten zu trennen, wenn er diese zwei Ströme gleichzeitig empfängt.

9. Datenstrom-Umleitungssystem, das enthält:
- mindestens einen Stromumleitungsserver nach einem der Ansprüche 4 bis 8,
- ein DNS-System, Domain Name System, das der IP-Adresse, Internet Protocol, des Stromumleitungsservers einen Zugangspunktnamen zuordnet, Umleitungs-APN genannt, und
- mindestens ein mobiles Endgerät, das konfiguriert ist, eine Registrierungsanforderung zu senden, die einen Bezug auf den Umleitungs-APN enthält.

10. Nicht entfernbare oder teilweise oder vollständig entfernbare Datenspeichereinrichtung, die EDV-Programmcodeanweisungen zur Ausführung der Schritte eines Verfahrens zur Umleitung von Datenströmen nach einem der Ansprüche 1 bis 3 aufweist.

11. Computerprogramm, das von einem Kommunikationsnetzwerk heruntergeladen und/oder auf einem computerlesbaren Träger gespeichert und/oder von einem Mikroprozessor ausgeführt werden kann, das Anweisungen zur Durchführung der Schritte eines Verfahrens zur Umleitung von Datenströmen nach einem der Ansprüche 1 bis 3 enthält, wenn es auf einem Computer ausgeführt wird.

## Claims

1. Method of redirection of data streams exchanged by a mobile terminal associated with an account, termed third-party account, with a telecommunications network, termed first network, said method comprising a prior phase comprising the following steps:
- said first network receives, from said mobile terminal, a registration request, and retrieves the profile of said third-party account, this profile mentioning an access point name, termed redirection APN,
- the first network emits a DNS, Domain Name System, request including said redirection APN,
- the DNS system provides in response the IP, Internet Protocol, address of at least one server, termed Stream Redirection server,
- the first network builds a tunnel between said Stream Redirection server and the mobile terminal, by providing the Stream Redirection server with at least one identifier of said third-party account,
- the Stream Redirection server provides a telecommunications network, termed second network, with which the user of the mobile terminal holds an account, termed personal account, distinct from the third-party account, with at least one identifier of said personal account,
- the Stream Redirection server builds a tunnel with said second network,
- said second network allocates said mobile terminal an IP address, termed second IP address, and transmits said second IP address to said Stream Redirection server, and
- the Stream Redirection server allocates the mobile terminal an IP address, termed first IP address, possibly identical to said second IP address, and dispatches said first IP address to the mobile terminal.

2. Method of redirection of data streams according to Claim 1, in which, subsequent to said prior phase, the mobile terminal exchanges data, termed personal data, with said second network, via said Stream Redirection server.

3. Method of redirection of data streams according to Claims 1 or Claim 2, in which, subsequent to said prior phase, the mobile terminal exchanges data, termed third-party data, with said first network, via said Stream Redirection server.

4. Server, termed Stream Redirection server, comprising means for:
- receiving, from a telecommunications network, termed first network, at least one identifier of an account, termed third-party account, held by a mobile terminal with said first network, and building a tunnel with the first network,
- providing a telecommunications network, termed second network, with which the user of the mobile terminal holds an account, termed personal account, distinct from said third-party account, with at least one identifier of said personal account,
- building a tunnel with said second network,
- receiving, from said second network, an IP, Internet Protocol, address, termed second IP address, allocated to said mobile terminal, and
- allocating the mobile terminal an IP address, termed first IP address, possibly identical to said second IP address, and dispatching said first IP address to the mobile terminal.

5. Stream redirection server according to Claim 4, furthermore comprising means for providing the second network with information serving for the billing operations between the first network and the second network.

6. Stream redirection server according to Claim 4 or Claim 5, furthermore comprising means for:
- receiving, from said mobile terminal, data, termed uplink personal data, and retransmitting said uplink personal data to said second network, and
- receiving, from the second network, data, termed downlink personal data, and retransmitting said downlink personal data to the mobile terminal.

7. Data stream redirection server according to any one of Claims 4 to 6, furthermore comprising means for:
- receiving, from said mobile terminal, data, termed uplink third-party data, and retransmitting said uplink third-party data to said first network, and
- receiving, from the first network, data, termed downlink third-party data, and retransmitting said downlink third-party data to the mobile terminal.

8. Data stream redirection server according to Claim 6 and Claim 7, furthermore comprising means for separating the stream of personal data from the stream of third-party data when it receives these two streams simultaneously.

9. Data stream redirection system, comprising:
- at least one Stream Redirection server according to any one of Claims 4 to 8,
- a DNS, Domain Name System, system associating an access point name, termed redirection APN, with the IP, Internet Protocol, address of said Stream Redirection server, and
- at least one mobile terminal configured to emit a registration request containing a reference to said redirection APN.

10. Irremovable, or partially or totally removable, means for storing data, comprising computer program code instructions for the execution of the steps of a data stream redirection method according to any one of Claims 1 to 3.

11. Computer program downloadable from a communication network and/or stored on a medium readable by computer and/or executable by a microprocessor, comprising instructions for the execution of the steps of a data stream redirection method according to any one of Claims 1 to 3, when it is executed on a computer.
